# EUROPEAN PATENT APPLICATION

(11) **EP 4 560 938 A1**
(43) Date of publication of application: **28.05.2025**
(21) Application number: 23843001.1
(22) Date of filing: 19.07.2023
(51) Int. Cl.: H04B 10/2575, G02F 1/35, H01Q 3/42, H04B 7/06

(54) **COHERENT SYNTHESIS PHOTOELECTRIC CONVERSION DEVICE**

(30) Priority: 20.07.2022 JP 2022115259
(71) Applicant: Tokushima University, Tokushima-shi, Tokushima 770-8501 (JP)
(72) Inventor: YASUI, Takeshi, Tokushima-shi, Tokushima 770-8501 (JP); KUSE, Naoya, Tokushima-shi, Tokushima 770-8501 (JP); TOKIZANE, Yu, Tokushima-shi, Tokushima 770-8501 (JP); HASE, Eiji, Tokushima-shi, Tokushima 770-8501 (JP); KISHIKAWA, Hiroki, Tokushima-shi, Tokushima 770-8501 (JP); OKAMURA, Yasuhiro, Tokushima-shi, Tokushima 770-8501 (JP); FUJIKATA, Junichi, Tokushima-shi, Tokushima 770-8501 (JP)
(74) Representative: Grünecker Patent- und Rechtsanwälte PartG mbB
(86) International application number: PCT/JP2023/026378
(87) International publication number: WO 2024/019078

(57) **Abstract**

The present invention realizes terahertz wireless transmission with low phase noise and high output. A coherent combining photoelectric conversion apparatus transmits, from a transmission antenna, a wireless signal obtained by modulating a carrier signal with a baseband signal including an information signal, and includes: a micro-optical resonator (2) that is excited by laser light and generates an optical frequency comb with a frequency interval fᵣₑₚ that is 100 GHz or more and 3 THz or less; a modulated signal generation unit (3) that separates a plurality of mutually adjacent optical frequency mode pairs from the optical frequency comb, and optically modulates one optical frequency mode of each pair using the same baseband signal; a photoelectric conversion element unit (4) that is provided in the transmission antenna and includes one or more photoelectric conversion elements that mix the optical frequency modes of each pair to generate a group of high-frequency electromagnetic wave signals having a frequency interval equal to the frequency interval fᵣₑₚ; and phase offset adjustment units (301, 302) that adjust a phase offset between the group of high-frequency electromagnetic wave signals.

## Description

### Technical Field

The present invention relates to a coherent combining wireless transmission apparatus and a phased array antenna apparatus using the same.

### Background Art

Conventionally, in mobile (wireless) communication (2G/3G/4G/5G, etc.), technological innovation accompanying advances in semiconductor technology (faster electronic circuits, higher frequencies) has driven generational evolution. However, the frequencies handled in next-generation mobile communication (Beyond 5G/6G) are expected to reach the so-called terahertz band (hereinafter referred to as the THz band) with carrier frequencies of 300 GHz and above, and there is a possibility that the technical limit (upper frequency limit) of electrical methods will be reached. That is, it is said that fundamental problems such as lower output and increased phase noise of wireless carrier waves, increased signal transmission loss, and time delays accompanying signal conversion between optical communication and mobile communication will become apparent.

On the other hand, optical communication using an optical fiber network has the fastest information transmission speed, and recently there has been progress in the development of silicon photonics technology, in which electronic wiring inside of a device is replaced with optical wiring to achieve ultra-high speed, large capacity, low delay, and low power consumption. Against this background, there have been recent examples of using optical devices as carrier generators in wireless communication as well, and incorporating optical communication technology in part of a system. For example, an example has been disclosed in which light of different wavelengths is modulated and then mixed to generate terahertz waves, which are then used for wireless communication (Non-Patent Document 1).

Furthermore, an example has been reported in which silicon photonics technology was used to prototype a phased array antenna that transmits terahertz-band electromagnetic waves obtained by causing interference of the output light of a multi-laser (Non-Patent Document 2).

As another method for generating light of two wavelengths with different frequencies, a method has been disclosed in which any optical frequency mode with a desired frequency interval is extracted from an optical frequency comb using a filter.

### (Patent Document 1).

### Citation List

### Patent Document

Patent Document 1: JP 2009-4858A

### Non-Patent Documents

Non-Patent Document 1: Tadao Nagatsuma, "Ultra-high-speed wireless communication enabled by terahertz waves", Journal of the Japan Society for Precision Engineering, Vol. 82, No. 3, 2016
Non-Patent Document 2: Kato, "Overview of research and development of highly-secure wireless communication technology using terahertz waves", Radio Wave Utilization Webinar 2021, October 28, 2021 http://www.kiai.gr.jp/jigyou/R3/PDF/1028p4.pdf

### Summary of Invention

### Technical Problem

However, when a multi-laser is used as a light source, it is difficult to strictly control phase noise between the lasers, and in particular, phase fluctuation, which is low-frequency phase noise. In the method of extracting any optical frequency modes from an optical frequency comb and obtaining terahertz waves from the beats thereof, even if it is possible to keep the phase noise low, there is a problem in that the intensity of the terahertz waves that can be generated from a single photoelectric conversion element is weak, resulting in a poor signal-to-noise ratio of the received signal, which tends to lead to communication errors. In addition, because the generated terahertz waves have a high frequency, they have strong beam directionality, and in order to propagate the terahertz waves toward a receiver in a specific direction, a mechanism that mechanically scans the radiation direction of the terahertz waves is necessary, which is problematic in that high-speed scanning is difficult.

### Solution to Problem

A coherent combining photoelectric conversion apparatus according to one aspect of the present invention is a wireless transmission apparatus configured to transmit, from a transmission antenna, a wireless signal obtained by modulating a carrier signal with a baseband signal including an information signal, the wireless transmission apparatus including: a micro-optical resonator that is excited by laser light and is configured to generate an optical frequency comb having a frequency interval fᵣₑₚ that is 100 GHz or more and 3 THz or less; a modulated signal generation unit configured to separate a plurality of mutually adjacent optical frequency mode pairs from the optical frequency comb and perform optical modulation on one optical frequency mode of each pair using the same baseband signal; and a photoelectric conversion element portion that is provided in the transmission antenna and is constituted by one or more photoelectric conversion elements configured to mix the optical frequency modes of each pair to generate a group of high-frequency electromagnetic wave signals having a frequency interval equal to the frequency interval fᵣₑₚ; and a phase offset adjustment unit configured to adjust a phase difference between the group of high-frequency electromagnetic wave signals.

The repetition frequency may be 300 GHz or more and 1 THz or less.

The phase offset adjustment unit may adjust the phase between the mutually adjacent optical frequency modes separated from the optical frequency comb.

The photoelectric conversion element may be constituted by a uni-traveling carrier photodiode.

The micro-optical resonator may be a medium having a nonlinear optical effect, and may be constituted by one or more media selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

The transmission antenna may include a plurality of antenna elements, the photoelectric conversion element may be provided in each of the antenna elements, and the group of high-frequency electromagnetic wave signals may be subj ected to wave field synthesis in the transmission antenna.

### Advantageous Effects of Invention

According to one aspect of the present invention, by extracting a plurality of adjacent optical frequency mode pairs with an equal frequency interval from one optical frequency comb and providing a photoelectric conversion element for each antenna element included in the transmission antenna, terahertz waves radiated from each antenna element can be superimposed in phase with little phase noise, thereby efficiently increasing the power of the terahertz waves. Also, by appropriately adjusting the phase of the terahertz wavefront radiated from each antenna element, it is possible to increase the gain of the transmission antenna, change the radiation pattern of the transmission antenna, and scan the beam radiation direction.

### Brief Description of Drawings

FIG. 1 is a block diagram of a wireless transmission apparatus using an optical frequency comb.
FIG. 2 is a block diagram of a coherent combining photoelectric conversion apparatus according to a first embodiment of the present invention.
FIG. 3 is a diagram illustrating an operation according to the first embodiment of the present invention. Photoelectric
FIG. 4 is a block diagram of a coherent combining photoelectric conversion apparatus according to a second embodiment of the present invention.
FIG. 5 is a diagram illustrating an operation of a phased array antenna apparatus including the coherent combining photoelectric conversion apparatus according to the second embodiment of the present invention.
FIG. 6 is a flowchart of an example of the present invention.

### Description of Embodiments

A first embodiment will be described in detail hereinafter with reference to the drawings. A wireless transmission apparatus in this embodiment aims to receive electromagnetic waves from a wireless terminal within a cell or small cell, and transmit the electromagnetic waves wirelessly to a switching station or relay station connected to a network, that is, through a so-called fronthaul. Before describing this embodiment, a basic configuration and operation of a wireless transmission apparatus using an optical frequency comb in a case where coherent combining and phased array antenna control are not performed will be described as a reference example.

### (Description of Reference Example)

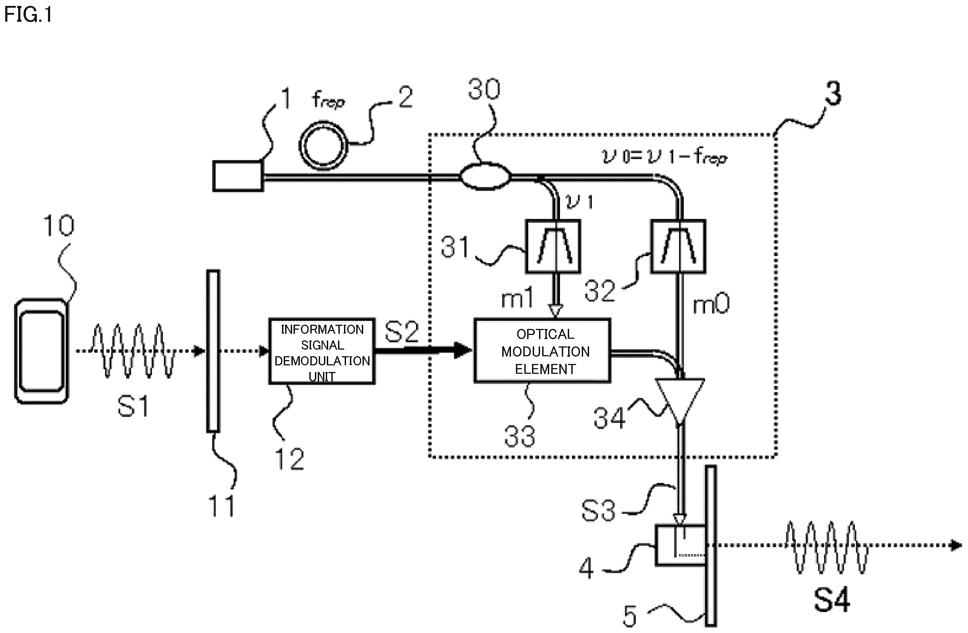

FIG. 1 shows a block diagram of a wireless transmission apparatus according to this embodiment. In FIG. 1, reference numeral 10 denotes a wireless terminal. The number of wireless terminals 10 may be one or more. The wireless terminal may be a mobile terminal or a fixed terminal. Reference numeral 11 denotes a reception antenna, which receives a wireless signal S1 from the wireless terminal 10. The reception antenna 11 may be an antenna array made up of a plurality of antenna elements so as to correspond to a plurality of wireless terminals 10. Also, the reception antenna 11 may be made up of a plurality of antenna groups corresponding to a plurality of wireless communication standards such as frequencies. An information signal demodulation unit 12 demodulates an information signal included in the wireless signal S1. The information signal is information such as an image, audio, or data, is various types of information transmitted from the wireless terminal 10 to this wireless transmission apparatus, and is transmitted in a signal state suitable for wireless transmission. The information signal demodulation unit 12 may be compatible with a plurality of wireless communication standards, such as LTE and 5G.

Furthermore, in FIG. 1, reference numeral 1 denotes a laser element that emits laser light of a single frequency. A DFB laser that emits laser light with an emission wavelength tuned to 1550 nm or a wavelength thereabout is preferred. Reference numeral 2 denotes a micro-optical resonator, which is excited by the laser light and generates an optical frequency comb. An optical frequency comb refers to light having an ultra-discrete multispectral structure in which a large number of optical frequency mode rows are arranged like the teeth of a comb with equal frequency fᵣₑₚ intervals and aligned optical phases. The micro-optical resonator 2 may be formed in a ring shape on a semiconductor substrate. The diameter may range from 40 µm to 400 µm. In addition, the micro-optical resonator 2 may be constituted by one or more types of media having a nonlinear optical effect, selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

Since the optical frequency comb (micro-optical frequency comb) generated by the micro-optical resonator 2 has a short optical resonator length, the frequency interval fᵣₑₚ between adjacent optical frequency modes can be made large. The frequency interval fᵣₑₚ may be, for example, 100 GHz or more and 3 THz or less. More preferably, it may be 300 GHz or more and 1 THz or less. Even more preferably, it may be 350 GHz or more and 600 GHz or less.

Reference numeral 30 denotes a coupler, reference numerals 31 and 32 denote bandpass filters, reference numeral 33 denotes an optical modulation element, and reference numeral 34 denotes an optical amplification element. These elements form an optical modulation unit 3. The optical modulation unit 3 separates mutually adjacent optical frequency modes from the optical frequency comb, and performs optical modulation on one of the optical frequency modes according to a baseband signal S2 that includes an information signal. Note that an arrayed waveguide diffractor (AWG) may be used instead of the bandpass filters 31 and 32. An optically-modulated optical frequency mode m1 (frequency v₁) is supplied to a photoelectric conversion unit 4 via the optical amplification element 34. The photoelectric conversion unit 4 may be constituted by a uni-traveling carrier photodiode (UTC-PD).

On the other hand, the optical frequency mode m0 of the frequency v₀ is supplied to the photoelectric conversion unit 4 through the optical amplification element 34 as-is. In the photoelectric conversion element 4, the optical frequency mode m1 (v₁) and the optical frequency mode m0 (v₀) are mixed together (S3), and the difference frequency (fᵣₑₚ) between them is output from the photoelectric conversion unit 4 as an electromagnetic wave (terahertz wave). The photoelectric conversion unit 4 is directly connected to an antenna 5, and a terahertz wave (S4) is radiated from the antenna 5 into the air.

### (First Embodiment)

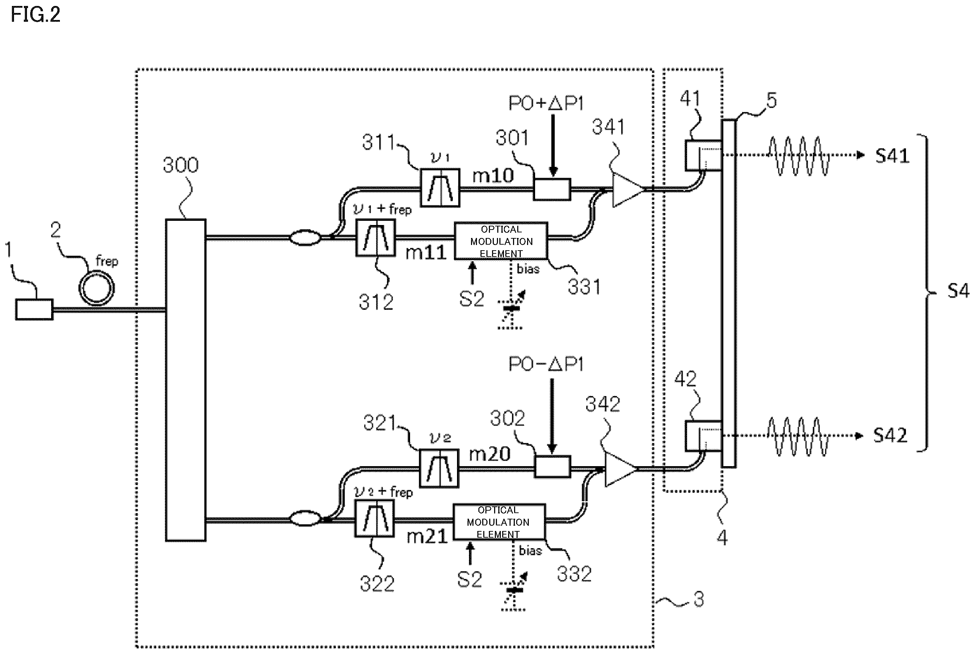

A first embodiment of the present invention will be described hereinafter. FIG. 2 is a block diagram of this embodiment. In FIG. 2, a laser element 1, a micro-optical resonator 2, and a transmission antenna 5 function in the same manner as those shown in FIG. 1. The micro-optical resonator 2 is excited by laser light and generates an optical frequency comb having a frequency interval fᵣₑₚ that is 100 GHz or more and 3 THz or less. More preferably, the frequency interval of the optical frequency comb may be 300 GHz or more and 1 THz or less. More preferably, the frequency interval may be 350 GH or more and 600 GHz or less. Although the wireless terminal, reception antenna, and information signal demodulation unit are not shown in FIG. 2, it is assumed that they have functions equivalent to those of the wireless terminal 10, the reception antenna 11, and the information signal demodulation unit 12 of FIG. 1. In addition, the optical modulation unit 3 is supplied with a baseband signal S2 including an information signal.

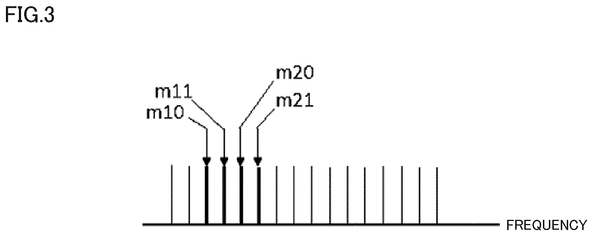

In this embodiment, the optical modulation unit 3 is constituted by a WDA coupler 300 and modulated signal generation units of two systems. The WDA coupler 300 separates mutually adjacent optical frequency modes m10 and m11 and mutually adjacent optical frequency modes m20 and m21 from the optical frequency comb, and supplies them to the modulated signal generation units of the respective systems. This is shown in FIG. 3.

The optical frequency modes m10 and m11 are supplied to a system of a modulated signal generation unit that includes optical bandpass filters 311 and 312, an optical modulation element 331, and an optical amplification element 341. These function in the same manner as the bandpass filters 31 and 32, the optical modulation element 33, and the optical amplification element 34 in FIG. 1. In addition, regarding the optical frequency modes m20 and m21, optical bandpass filters 321 and 322, an optical modulation element 332, and an optical amplification element 342 also function in the same manner as those shown in FIG. 1.

The optical frequency modes that have passed through the respective systems are supplied to the photoelectric conversion unit 4 via optical fibers, optical waveguides, or the like. In this embodiment, the photoelectric conversion unit 4 is constituted by photoelectric conversion elements 41 and 42, both of which are provided directly on the transmission antenna 5. The photoelectric conversion elements 41 and 42 may each be a uni-traveling carrier photodiode. They may also be formed on the same substrate through a semiconductor process.

In this embodiment, the optical modulation elements 331 and 332 are supplied with the same information signal (baseband signal S2). Furthermore, after the phases of both systems are completely synchronized, the optical frequency modes m11 and 21 modulate the baseband signal S2 using the same method. The modulation method may be amplitude modulation or phase modulation, such as QPSK or QAM, or a method including both.

High-frequency wireless signals S41 and S42 emitted from the photoelectric conversion elements 41 and 42 are multiplexed in the antenna 5 and radiated into the atmosphere as a wireless signal S4. If the phases of the high-frequency wireless signals S41 and S42 are not aligned, the transmission power of the wireless signal S4 will not be a simple addition of the high-frequency wireless signals S41 and S42. In an extreme case, when the two signals are out of phase with each other by 180 degrees, they cancel each other out and the wireless signal S4 is not emitted. In view of this, phase offset adjustment units 301 and 302 are provided in order to adjust the phase offset between the high-frequency wireless signals S41 and S42.

The phase offset adjustment units 301 and 302 adjust the phase between mutually adjacent optical frequency modes separated from the optical frequency comb. The phase offset adjustment units 301 and 302 may use an electro-optical effect, or may be constituted by a micro-sized heater that locally heats an optical waveguide or fiber. When a heater is used, offset currents PO are passed through the phase offset adjustment units 301 and 302 in advance, and the currents may be changed complementarily to PO+ΔP and PO-ΔP based on this offset current. As a result, a temperature difference occurs in each heater, causing a relative change in the refractive index (optical path length) of the optical waveguide, whereby it is possible to change the phase difference between the two with high sensitivity and as appropriate. Electromagnetic wave generation using photoelectric conversion of two-mode light (optical frequency interval fᵣₑₚ) has the characteristic that a shift in the optical phase difference of the two-mode light is reflected as-is in the phase shift of the electromagnetic waves (frequency fᵣₑₚ).

However, from the opposite perspective, if minute phase fluctuations or phase noise occurs between the path of m10 (m20) and the path of m11 (m21) in FIG. 2, that is, between the Mach-Zehnder paths, this will be transferred as-is as phase fluctuations or phase noise of the high-frequency electromagnetic wave signal. In view of this, a phase error between these paths must be kept to a minimum. For this reason, it is preferable to integrate the optical bandpass filters 311 (321) and 312 (322), the phase offset adjustment unit 301 (302), and the optical modulation element 331 (332) and place them close to each other on a silicon wafer to shorten the Mach-Zehnder paths as much as possible.

Note that the current flowing in the phase offset adjustment unit 302 may be controlled by a microprocessor or the like. Also, in this embodiment, an optical phase adjustment element is provided, but when phase modulation is performed using an LN modulation element as the optical modulation element, the bias voltage thereof may be adjusted.

As described above, according to this embodiment, a plurality of optical frequency mode pairs are extracted from an optical frequency comb, and after phase offset adjustment, they are additively combined to obtain a coherently combined high-frequency wireless signal. Since coherent combining is not power addition but voltage addition, when two waves are coherently combined, 2²=4 times the power can be obtained.

### (Second Embodiment)

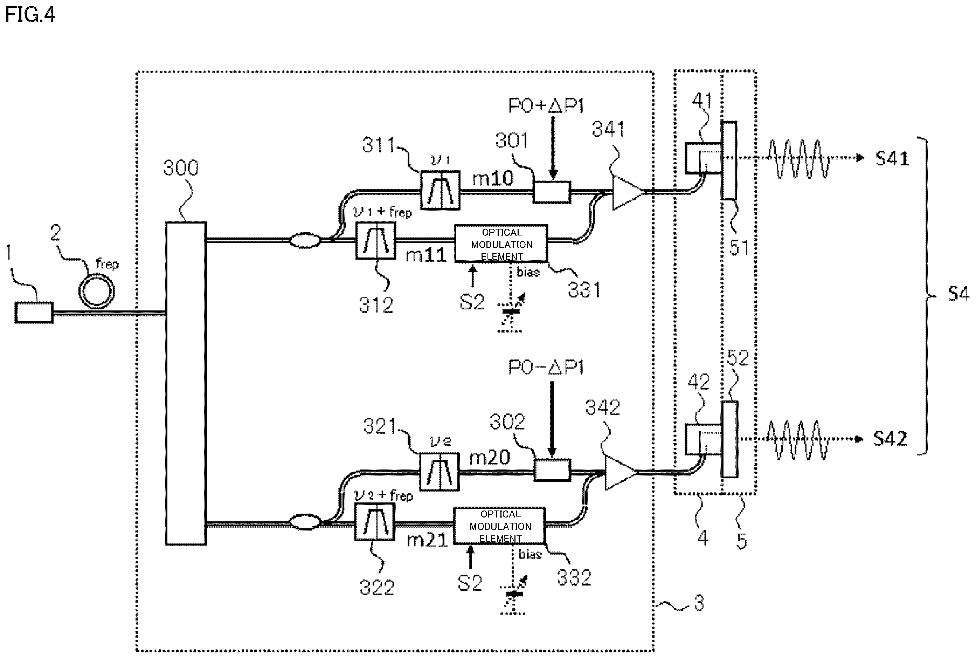

A second embodiment of the present invention will be described hereinafter. FIG. 4 shows a block diagram of this embodiment. In FIG. 4, a laser element 1 and a micro-optical resonator 2 function in the same manner as those shown in FIG. 1 or FIG. 2. Also, optical bandpass filters 311 and 312, an optical modulation element 331, an optical amplification element 341, optical bandpass filters 321 and 322, an optical modulation element 332, an optical amplification element 342, and phase offset adjustment units 301 and 302 function in the same manner as those in FIG. 2.

The configuration differs from that in FIG. 2 in that a photoelectric conversion unit 4 in FIG. 4 is constituted by photoelectric conversion elements 41 and 42, and a transmission antenna 5 is an array configuration constituted by antenna elements 51 and 52. Furthermore, the photoelectric conversion elements 41 and 42 are directly attached to independent antenna elements 51 and 52, respectively. The antenna elements 51 and 52 are preferably bow-tie antennas. It is also possible to use horn antennas or small parabolic antennas. The photoelectric conversion elements 41 and 42 are fixed near the reflecting surfaces of the respective antenna elements or the focal points of lenses. The photoelectric conversion elements 41 and 42 and the main body of the wireless transmission apparatus may be connected by optical fibers. By independently allocating the antenna elements 51 and 52 to the photoelectric conversion elements 41 and 42, it is possible to form antennas in an array, thereby increasing the degree of freedom in design. This will be described again in the following embodiment.

### (Third Embodiment)

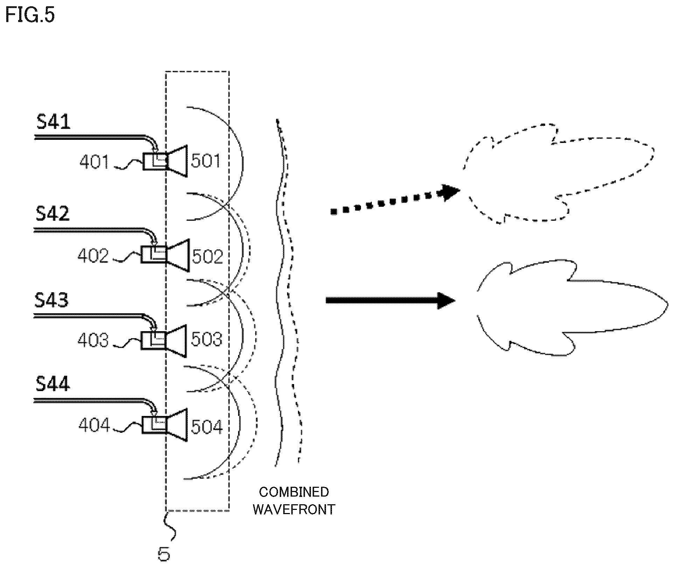

In this embodiment, the transmission antenna 5 is constituted by four antenna elements 501 to 504. Each antenna element may be a bowtie antenna. Each antenna element may also be a horn antenna. As an example, a conceptual diagram is shown in FIG. 5. The waveguides of the antenna elements are respectively provided with photoelectric conversion elements 401 to 404. Also, a convex lens made of polytetrafluoroethylene or the like is provided at the aperture of each antenna element, and a spherical wave is radiated from each antenna element.

As described above, by controlling the phase offset adjustment unit provided in each system of the modulated signal generation unit, it is possible to adjust the phases of the electromagnetic waves at the apertures of the antennas to be uniform. At this time, the electromagnetic waves transmitted from the antenna elements 501 to 504 are combined into one planar wave. That is, the antenna elements 501 to 504 behave as one large antenna. Generally, the gain of an antenna is related to the size of the aperture relative to the wavelength, and therefore this embodiment also has the effect of increasing not only the transmission power but also the antenna gain.

Furthermore, by applying this embodiment, a phased array antenna can be easily realized. That is, by shifting the phase of the electromagnetic waves at the antenna aperture by a predetermined amount for each antenna element as indicated by the dotted lines in FIG. 5, the radiation angle of the combined wavefront can be changed. Note that in this embodiment, the antenna elements are arranged in a line, but they may also be aligned two-dimensionally.

The characteristic of a phased array antenna is determined by the overall size of the antenna and the number of antenna elements. First, the larger the overall size of the antenna is, the narrower the width of the main beam (main lobe) is and the higher the gain is. Also, the greater the number of antenna elements constituting the antenna is, the closer the combined wavefront can be to a planar wave, and the greater the contact angle of the beam can be made. However, when the beam is swung widely, the phase difference between the antenna elements also increases, and the combined wavefront becomes stepped, causing side lobes to appear in the radiation pattern.

### [Examples]

### (First Example)

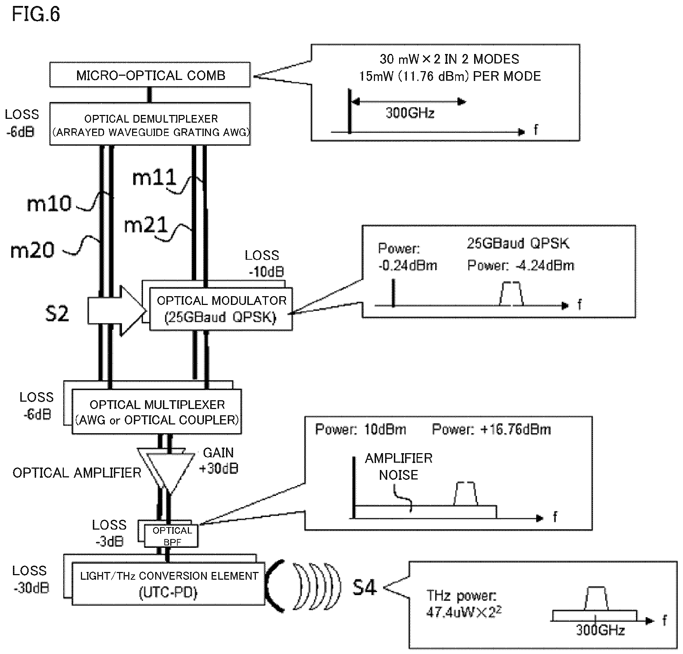

A first example of the present invention will be described below with reference to FIG. 6. In this example, the gain of the entire transmission system is estimated after taking into consideration the loss in each process of the coherent combining wireless transmission consisting of two systems.

First, two of any adjacent optical frequency mode pairs are separated from the optical frequency comb. The power of each optical frequency mode is assumed to be 15 mW (11.76 dBm). On the other hand, assuming that there is a loss of 6 dB in the arrayed waveguide diffractor (AWG), 10 dB in the optical modulator, 6 dB in the multiplexing process, and 3 dB in the optical bandpass filter, and assuming a gain increase of 30 dB in the optical amplifier, a gain of 11.76-6-10-6+30-3=16.76 dBm per single mode can be obtained up to this point.

Furthermore, the loss in the optical THz conversion element (photoelectric conversion unit) is estimated to reach 30 dB at 300 GHz, and therefore the output is ultimately 47.4 µW (16.76-30=-13.24 dBm) per single mode. Coherent combining of the two modes adds 6 dB, resulting in an output of 189.6 µW (-7.24 dBm).

### Industrial Applicability

The present invention can be used in a base station that transmits information collected from mobile terminals to a switching center, or in a relay station that transmits information between base stations.

### List of Reference Numerals

1 Laser element
2 Micro-optical resonator
3 Optical modulation unit
4 Photoelectric conversion unit
5 Transmission antenna
10 Wireless terminal
11 Reception antenna
12 Information signal demodulation unit
30 Coupler
31, 32 Bandpass filter
33 Optical modulation element
34 Optical amplification element
41, 42 Photoelectric conversion element
50 Transmission antenna
101 to 104 Laser element
201 to 204 Micro-optical resonator
300 WDA coupler
301 to 304 Modulated signal generation unit
3011, 3012 Bandpass filter
33, 3013 Optical modulation unit
34, 3014 Optical amplification element
401 to 404 Photoelectric conversion element
501 to 504 Antenna element

## Claims

1. A coherent combining photoelectric conversion apparatus that is a wireless transmission apparatus configured to transmit, from a transmission antenna, a wireless signal obtained by modulating a carrier signal with a baseband signal including an information signal, the wireless transmission apparatus comprising:
a micro-optical resonator that is excited by laser light and is configured to generate an optical frequency comb having a frequency interval fᵣₑₚ that is 100 GHz or more and 3 THz or less;
a modulated signal generation unit configured to separate a first optical frequency mode pair and a second optical frequency mode pair, each of which is constituted by adjacent optical frequency modes, from the optical frequency comb, the modulated signal generation unit including a first modulation unit configured to optically modulate one optical frequency mode included in the first optical frequency mode pair using the baseband signal and a second modulation unit configured to optically modulate one optical frequency mode included in the second optical frequency mode pair using the baseband signal;
a photoelectric conversion element unit including one or more photoelectric conversion elements configured to mix the optical frequency modes of each pair to generate a group of high-frequency electromagnetic wave signals having a frequency interval equal to the frequency interval fᵣₑₚ; and
a phase offset adjustment unit configured to adjust a phase difference between the group of high-frequency electromagnetic wave signals.

2. The coherent combining photoelectric conversion apparatus according to claim 1, wherein the repetition frequency is 300 GHz or more and 1 THz or less.

3. The coherent combining photoelectric conversion apparatus according to claim 1, wherein the phase offset adjustment unit adjusts at least one of a phase difference of the first optical frequency mode pair and a phase difference of the second optical frequency mode pair so as to eliminate a phase difference between the group of high-frequency electromagnetic wave signals.

4. The coherent combining photoelectric conversion apparatus according to claim 1, wherein the photoelectric conversion element includes a uni-traveling carrier photodiode.

5. The coherent combining photoelectric conversion apparatus according to claim 1, wherein the micro-optical resonator is a medium having a nonlinear optical effect and includes one or more media selected from the group consisting of silicon nitride (Si₃N₄), aluminum gallium arsenide (AlGaAs), lithium niobate (LiNbO₃), tantalum pentoxide (Ta₂O₅), and gallium nitride (GaN).

6. The coherent combining photoelectric conversion apparatus according to claim 1, wherein the transmission antenna is constituted by a plurality of antenna elements, the photoelectric conversion element is provided in each of the plurality of antenna elements, and the wireless signal is obtained by subjecting the group of high-frequency electromagnetic wave signals to wave field synthesis in the transmission antenna.
